# EUROPÄISCHE PATENTSCHRIFT

(11) **EP 2 393 755 B1**
(45) Veröffentlichungstag und Bekanntmachung des Hinweises auf die Patenterteilung: **04.05.2016**
(21) Anmeldenummer: 09799070.9
(22) Anmeldetag: 10.12.2009
(51) Int. Cl.: C02F 3/28, C02F 103/28

(54) **VERFAHREN ZUR ANAEROBEN REINIGUNG VON ABWASSER**
METHOD FOR ANAEROBIC WASTE WATER TREATMENT
PROCÉDÉ DE TRAITEMENT ANAÉROBIE DES EAUX USÉES

(30) Priorität: 09.02.2009 DE 102009008044
(43) Veröffentlichungstag der Anmeldung: 14.12.2011
(73) Patentinhaber: Voith Patent GmbH, 89522 Heidenheim (DE); Aquatyx Wassertechnik GmbH, 88214 Ravensburg (DE)
(72) Erfinder: GOMMEL, Axel, 88214 Ravensburg (DE); EFINGER, Dieter, 84036 Kumhausen (DE); GESSLER, Werner, 88213 Ravensburg (DE); MULDER, Ronald, Alkmaar (NL)
(74) Vertreter: Manitz, Finsterwald & Partner GbR
(86) Internationale Anmeldenummer: PCT/EP2009/066809
(87) Internationale Veröffentlichungsnummer: WO 2010/088993

(56) Entgegenhaltungen:
- EP-A1- 0 493 727
- EP-A1- 1 806 323
- DE-A1-102006 020 709
- DE-B3-102004 021 022
- DE-U1-202006 013 811
- US-A- 4 780 198

## Beschreibung

Die Erfindung betrifft ein Verfahren zur anaeroben Reinigung von Abwasser, insbesondere von Abwasser aus der Papierindustrie gemäß Anspruch 1.

Zur Abwasserreinigung sind eine Vielzahl von mechanischen, chemischen sowie biologischen Verfahren und entsprechende Reaktoren bekannt. Bei der biologischen Abwasserreinigung wird das zu reinigende Abwasser mit aeroben oder anaeroben Mikroorganismen kontaktiert, welche die in dem Abwasser enthaltenen organischen Verunreinigungen im Falle von aeroben Mikroorganismen überwiegend zu Kohlendioxid, Biomasse und Wasser und im Falle von anaeroben Mikroorganismen vorwiegend zu Kohlendioxid und Methan und nur zu einem geringen Teil zu Biomasse abbauen.

Dabei werden die biologischen Abwasserreinigungsverfahren in jüngster Zeit zunehmend mit anaeroben Mikroorganismen durchgeführt, weil bei der anaeroben Abwasserreinigung nicht unter hohem Energieaufwand Sauerstoff in den Bioreaktor eingeführt werden muss, bei der Reinigung energiereiches Biogas erzeugt wird, welches nachfolgend zur Energiegewinnung eingesetzt werden kann, und deutlich geringere Mengen an Überschussschlamm erzeugt werden.
Je nach der Art und Form der eingesetzten Biomasse werden die Reaktoren für die anaerobe Abwasserreinigung in Kontaktschlammreaktoren, UASB-Reaktoren, EGSB-Reaktoren, Festbettreaktoren und Fliessbettreaktoren unterteilt.
Während die Mikroorganismen bei Festbettreaktoren an ortsfesten Trägermaterialien und die Mikroorganismen bei Fliessbettreaktoren auf frei beweglichen, kleinem Trägermaterial anhaften, werden die Mikroorganismen bei den UASB und EGSB-Reaktoren in Form von sogenannten Pellets eingesetzt. Im Unterschied zu UASB(upflow anaerobic Sludge blanket; anaerobe Aufströmschlammbett) -Reaktoren sind EGSB-(expanded granulär Sludge bed; expandierte, granuläre Schlammbett) - Reaktoren höher und weisen bei gleichem Volumen eine deutlich kleinere Grundfläche auf.
Bei den UASB und EGSB-Reaktoren wird dem Reaktor über einen Zulauf im unteren Reaktorbereich kontinuierlich zu reinigendes Abwasser oder eine Mischung aus zu reinigendem Abwasser und bereits gereinigtem Abwasser aus dem Ablauf des Anaerobreaktors zugeführt und durch ein oberhalb des Zulaufs befindliches, Mikroorganismenpellets enthaltendes Schlammbett geführt.
Beim Abbau der organischen Verbindungen aus dem Abwasser bilden die Mikroorganismen insbesondere Methan und Kohlendioxid enthaltendes Gas (welches auch als Biogas bezeichnet wird), das sich teilweise in Form kleiner Bläschen an den Mikroorganismenpellets anlagert und teilweise in Form freier Gasbläschen in dem Reaktor nach oben steigt. Aufgrund der angelagerten Gasbläschen sinkt das spezifische Gewicht der Pellets, weshalb die Pellets in dem Reaktor nach oben steigen. Um das gebildete Biogas und die aufsteigenden Pellets von dem Wasser zu trennen, sind in dem mittleren und/ oder oberen Teil des Reaktors Abscheider zumeist in Form von Gashauben angeordnet, unter deren First sich Biogas ansammelt, welches ein Gaspolster ausbildet. Von Gas und Mikroorganismenpellets befreites, gereinigtes Wasser steigt in dem Reaktor nach oben und wird am oberen Ende des Reaktors über Überläufe abgezogen. Derartige Verfahren und entsprechende Reaktoren sind beispielsweise in der EP 0 170 332 A und in der EP 1 071 636 B beschrieben.

Besonders wichtig bei den zuvor beschriebenen Verfahren ist die gleichmäßige Verteilung des dem Reaktor über den Zulauf zugeführten Abwassers über den Reaktorquerschnitt, um eine gute Vermischung der in dem Reaktor befindlichen Schlammpellets, des in dem Reaktor befindlichen Wassers und des zugefügten Abwassers zu erreichen. Um diese Erfordernisse zu erfüllen, wurde bereits eine Vielzahl von mit entsprechenden Zuläufverteilern ausgestatteten Reaktoren vorgeschlagen.

Diese haben im Bereich des Reaktorraumes eine Vielzahl von Zuläufen über die das zu reinigende Abwasser verteilt werden soll.
Speziell bei hoch kalkhaltigem Abwasser, wie Abwasser aus der Papierindustrie, kommt es immer wieder zur Bildung von Ausfällungen und Ablagerungen. Diese sedimentieren am Boden des Reaktorbehälters und erhöhen so den Strömungswiderstand an den Ausströmöffnungen der Zuläufe. Im Ergebnis strömt an anderen Zuläufen des Zulaufverteilers mehr Volumen aus.
Dies kann dazu führen, dass mehr als 75% der Zuläufe inaktiv sind, ohne dass dies von außen erkennbar wäre. Wegen der damit verbundenen ungleichmäßigen Zuführung des Abwassers kann die Effizienz der Abwasserbehandlung erheblich sinken.

Aus der DE 20 2006 013 811 U1 ist ein Reaktor zur anaeroben Abwasserreinigung bekannt, welcher in seinem Bodenbereich wenigstens ein Ablenkmittel umfasst, welches derart ausgestaltet ist, dass aus einer Zulaufleitung austretendes Abwasser in eine vom Reaktorquerschnitt aus gesehen kreisförmige Strömung umgelenkt wird.

In der EP 0 493 727 A1 wird ein Reaktor zur kontinuierlichen mechanischen und anaeroben biologischen Reinigung offenbart, bei dem zwischen dem Zulauf und dem Überlauf eine Trennvorrichtung vorgesehen ist, welche vom darüber liegenden und darunter liegenden Wasser passierbar ist.

Aus der US 4,780 198 ist ein Reaktor zur anaeroben Reinigung von Abwasser bekannt, welcher Zulauf- und Ablaufrohre umfasst, welche so angeordnet ist, dass zwischen den unten liegenden Zulaufrohren und den oben liegenden Ablaufrohren durch einen Pumpeffekt eine heftige Bewegung des Abwassers und damit Vermischung erfolgt.

Die Aufgabe der Erfindung ist es, eine möglichst gleichmäßige Zuführung von zu reinigendem Abwasser am Boden des Reaktorbehälters zu gewährleisten.
Dabei wird insbesondere nachfolgend unter Pellets granulierter Bioschlamm verstanden.

Erfindungsgemäß wurde die Aufgabe durch ein Verfahren zur anaeroben Reinigung von Abwasser, insbesondere von Abwasser aus der Papierindustrie gelöst, welches die folgenden Schritte umfasst:
- Bereitstellen eines Reaktor umfassend einen Reaktorbehälter, mehrere im unteren Bereich des Reaktorbehälters angeordnete Zuläufe zur Zuführung von zu reinigendem Abwasser in den Reaktor, wenigstens einen Ablauf zum Abführen von gereinigtem Wasser sowie wenigstens einen Sedimentabzug, wobei ein oder mehrere Zuläufe von einer Zulaufleitung und mehrere Zulaufleitungen von einer Sammelzulaufleitung gespeist werden, alle Zulaufleitungen jeweils ein Steuerventil besitzen und der Reaktorbehälter einen Boden aufweist, wobei alle Zuläufe über den Boden des Reaktorbehälters hinausragen,
- Zuführen von zu reinigendem Abwasser von der Sammelzulaufleitung zu den mehreren Zulaufleitungen,
- Zuführen von zu reinigendem Abwasser von den Zulaufleitungen über die Zuläufe in den Reaktorbehälter, wobei zumindest die Mehrzahl der Zulaufleitungen einer Sammelzulaufleitung maximal 10 Zuläufe mit zu reinigendem Abwasser versorgt, und
- Öffnen zumindest einzelner der Steuerventile wenigstens zeitweise unterschiedlich weit,

wobei alle der Zuläufe so hoch über dem Boden angeordnet werden, dass sie über eine mögliche Sedimentablagerung am Boden, die selbst eine Schräge bildet, hinausragen.

Durch die Minimierung der den Zulaufleitungen zugeordneten Zuläufe kann die Verteilung der Zufuhr von zu reinigendem Abwasser über den Querschnitt des Reaktorbehälters besser gesteuert und somit auch vergleichmäßigt werden.
Dies ist auch dann noch möglich, wenn einzelne Zuläufe von Sedimentablagerungen teilweise oder ganz bedeckt sind.
Außerdem kommt es wegen der geringen Anzahl von Zuläufen einer Zulaufleitung beim Verschluss nur eines oder weniger Zuläufe zu einer sehr starken Verstärkung der Strömung bei den anderen freien Zuläufen dieser Zulaufleitung, was deren Verschluss entgegenwirkt.
Durch die höhere Anzahl an Zulaufleitungen kann so auch eine gleichmäßigere Verteilung der Zufuhr des zu reinigenden Abwassers über den Boden des Reaktorbehälters selbst beim Verschluss von Zuläufen gewährleistet werden. Wenn es zur Verstopfung bzw. ungleichmäßigen Durchströmung kommt, ist dies daran zu erkennen, dass diese Zuläufe kalt werden.

In Abhängigkeit von der Konstruktion und Größe des Reaktors sowie der Art des Abwassers kann es selbst unter Berücksichtigung des erhöhten Aufwandes für die erhöhte Anzahl an Zulaufleitungen und Steuerventilen vorteilhaft sein, wenn die Mehrzahl der Zulaufleitungen einer Sammelzulaufleitung maximal 6, vorzugsweise maximal 3 Zuläufe oder gar nur einen Zulauf mit zu reinigendem Abwasser versorgt.

Zur umfassenden Beeinflussung des Zulauf an zu reinigendem Abwasser besitzen erfindungsgemäß alle Zulaufleitungen ein Steuerventil.

Erfindungsgemäß ragen alle Zuläufe über den Boden des Reaktorbehälters hinaus. Auf diese Weise kann verhindert werden, dass am Boden des Reaktorbehälters absetzende Sedimente überhaupt oder zumindest allzu schnell die Zuläufe überdecken.
Entscheidend ist hierbei lediglich eine bestimmte Entfernung zum Boden des Reaktors, so dass die Zuläufe durch den Boden oder seitlich in den Reaktorbehälter geführt werden können.

Es ist außerdem vorteilhaft, wenn wenigstens die Mehrzahl der Zulaufleitungen, vorzugsweise alle Zulaufleitungen aus dem Reaktorbehälter herausgeführt sind.
Da sich meist auch der Zulaufverteiler außerhalb des Reaktorbehälters befindet, ist dies einerseits einfach zu realisieren, ermöglicht aber andererseits die Zugänglichkeit zu Mess- und Steuereinrichtungen, sofern diese in diesem außerhalb des Reaktorbehälters liegenden Teil der Zulaufleitung installiert oder angebracht sind.

Neben den Steuerventilen sollte wenigstens die Mehrzahl der Zulaufleitungen, vorzugsweise alle Zulaufleitungen eine Strömungsmesseinrichtung besitzen, so dass sich relativ leicht ermitteln lässt, ob und wie viele Zuläufe der entsprechenden Zulaufleitung verschlossen sind. Auf dieser Basis kann dann die Zulaufverteilung über den Querschnitt des Reaktors besser gesteuert werden.

Um das Sediment leichter vom Reaktorboden lösen und abführen zu können, ist es von Vorteil, wenn zumindest ein Zulauf, vorzugsweise alle Zuläufe wenigstens einer Zulaufleitung zu einem Sedimentabzug ausgerichtet sind.

Außerdem sollten die Zuläufe im Interesse einer gleichmäßigen Verteilung der Zulaufmenge an Abwasser auch vorzugsweise gleichmäßig über den Boden des Reaktorbehälters verteilt angeordnet sein.

Hinsichtlich der konstruktiven Gestaltung des Reaktorbehälters hat es sich als vorteilhaft erwiesen, wenn der Reaktorbehälter zumindest einen sich nach unten verjüngenden Trichter aufweist und sich der Sedimentabzug am unteren Ende des Trichters befindet. Der Reaktor wie auch der Trichter können einen runden oder eckigen Querschnitt aufweisen.

Der trichterförmige Reaktorboden, insbesondere in Form eines sich nach unten verjüngenden Einfachkonus oder Doppelkonus gewährleistet, dass aus dem oberen Reaktorteil herabsinkende Feststoffe mit hohem spezifischem Gewicht bis an die Spitze des Trichters herabsinken und von dort abgeführt werden können.

Hierdurch kann eine Ansammlung von Sedimenten im Bereich der Zuläufe, was zur Bildung von Toträumen und zu einer Reduzierung des effektiven Reaktorquerschnitts führt, vermieden werden.
Dabei kann der Reaktorboden auch von mehreren Trichtern mit Sedimentabzug gebildet werden.

Des Weiteren sollte wenigstens eine Zentral-Zulaufleitung zur Zuführung von Flüssigkeit in das untere Ende des Trichters münden, wobei die zugeführte Flüssigkeit von zu reinigendem Abwasser, gereinigtem Abwasser oder einer Mischung davon gebildet werden kann. Über diese Flüssigkeit können die Pellets reaktiviert und/oder die Sedimentablösung und -abfuhr unterstützt werden.

Zur Anpassung der Zuläufe an die Gegebenheiten im Reaktor und zur Vermeidung von Verstopfungen sowie zur Unterstützung der Sedimentablösung oder -abfuhr ist es auch von Vorteil, wenn zumindest einige, vorzugsweise alle Zuläufe hinsichtlich ihrer Lage und/oder Ausrichtung veränderbar sind.
Im Hinblick auf das erfindungsgemäße Verfahren ist wesentlich, dass alle Zulaufleitungen jeweils ein Steuerventil besitzen und zumindest einzelne Steuerventile wenigstens zeitweise unterschiedlich weit geöffnet sind. Dabei wird die Durchflussmenge bei den Zulaufleitungen den Erfordernissen angepasst und bei Bedarf auch auf Null gesenkt.

Im Interesse einer umfassenden Steuerbarkeit sollte daher bei allen Zulaufleitungen die hindurchfließende Abwassermenge über die Steuerventile gesteuert werden.

Um die Verteilung des in den Reaktorbehälter zu führenden Abwassers besser vergleichmäßigen zu können, sollte zumindest bei einigen, vorzugsweise bei allen Zulaufleitungen die Durchflussmenge gemessen und die Steuerventile in Abhängigkeit von der Durchflussmenge in den Zulaufleitungen gesteuert werden.

Des Weiteren ist es für die Prozesssteuerung vorteilhaft, wenn der Umfang der Sedimentablagerung am Boden des Reaktorbehälters und/oder die abgeführte

Sedimentmenge gemessen wird. Auf diese Weise lässt sich nicht nur der Umfang sondern auch die Verteilung der Sedimentablagerung erfassen.

Dies ermöglicht auch eine gezielte Sedimentabfuhr.
Sollen beispielsweise Sedimente in einem bestimmten Sektor des Reaktorbodens abgelöst bzw. entfernt werden, so werden über die Steuerventile nur Zuläufe verstärkt oder ausschließlich mit Flüssigkeit, insbesondere zu reinigendem Abwasser versorgt, die in dem freizuspülendem Sektor des Bodens angeordnet und/oder auf einen Sedimentabzug des Sektor gerichtet sind.
Unabhängig von der Sedimententfernung in einem bestimmten Sektor kann es zur allgemeinen Unterstützung der Sedimentabfuhr auch von Vorteil sein, wenn über die Steuerventile nur Zuläufe verstärkt oder ausschließlich mit Flüssigkeit, insbesondere zu reinigendem Abwasser versorgt werden, die auf einen oder mehrere Sedimentabzüge gerichtet sind.

Nachfolgend soll die Erfindung an mehreren Ausführungsbeispielen näher erläutert werden. In der beigefügten Zeichnung zeigt:
Figur 1: einen schematischen Längsschnitt durch einen Reaktor und
Figur 2 und 3: verschiedene Zulaufverteilsysteme am Boden 8 des Reaktors.

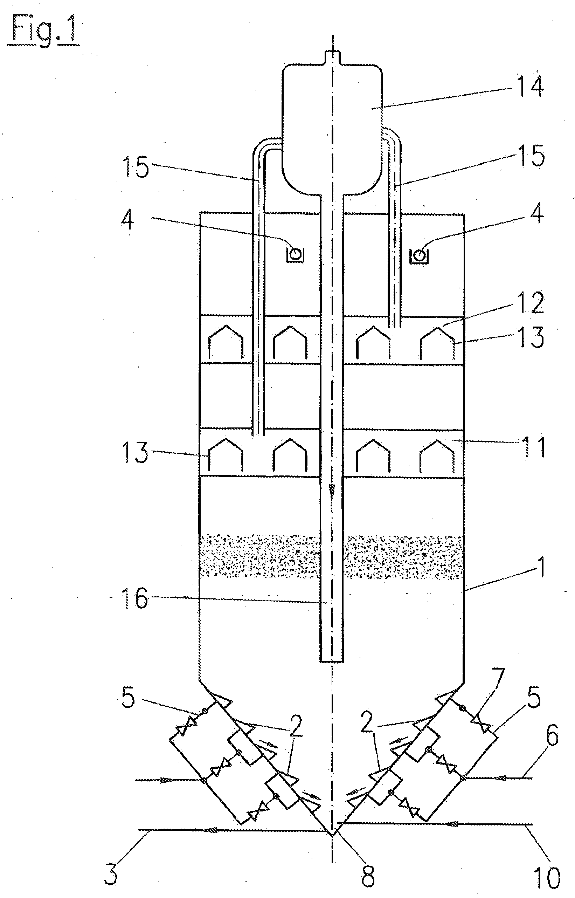

Der in Figur 1 dargestellte Bioreaktor umfasst einen Reaktorbehälter 1, der in seinem mittleren und oberen Teil zylindrisch ausgestaltet ist und sich in seinem unteren Teil nach unten konisch verjüngt.
Im unteren Teil des Reaktors, d.h. im Trichter ist das Zulaufverteilsystem zur Zuführung des zu reinigenden Abwassers untergebracht.

In dem mittleren und oberen Reaktorbehälter 1 befinden sich zwei Abscheider 11,12 welche jeweils mehrere Gashauben 13 aufweisen. In der Praxis besteht jeder der Abscheider 11,12 aus mehreren Lagen an Gashauben 13; in der vorliegenden Fig. 1 ist jedoch aus Einfachheitsgründen pro Abscheider 11,12 jeweils nur eine Lage Gashauben 13 dargestellt.

Oberhalb des oberen Abscheiders 12 befinden sich Abläufe 4 jeweils in Form eines Überlaufs, über welche das gereinigte Wasser aus dem Reaktor abgezogen wird.

Auf dem Reaktor ist eine Gastrenneinrichtung 14 angeordnet, die mit den beiden Abscheidern 11,12 über die Leitungen 15 verbunden ist. Zudem führt von dem Boden der Gastrenneinrichtung 14 eine Sinkleitung 16 in den unteren Teil des Reaktorsbehälters 1.

Des weiteren befindet sich im unteren Teil des Reaktorbehälters 1, nämlich im unteren Teil 2 des Trichters, ein Sedimentabzug 3 sowie eine Zentral-Zulaufleitung 10, wobei über den Sedimentabzug 3 Feststoffe bzw. eine Suspension aus Feststoff und Flüssigkeit aus dem Reaktorbehälter 1 abgezogen werden können und über die Zentral-Zulaufleitung 10 Flüssigkeit zum Spülen des unteren Reaktorbehälterteils 1 eingeführt werden kann.

Das Zulaufverteilsystem wird von einer Vielzahl von Zuläufen 2 gebildet, die gleichmäßig am Boden 8 des Reaktorbehälters 1, hier der Innenwand des Trichters angeordnet sind.
Über diese Zuläufe 2 wird das zu reinigende Abwasser in den Reaktorbehälter 1 geführt. Dabei werden nur einige wenige, konkret hier nicht mehr als fünf Zuläufe 2 von einer gemeinsamen Zulaufleitung 5 mit dem Abwasser versorgt. Jede Zulaufleitung 5 ist über je ein Steuerventil 7 mit einer, mehreren Zulaufleitungen 5 zugeordneten Sammelzulaufleitung 6 verbunden.

Auf diese Weise wirkt sich ein Verschluss eines Zulaufs 2 stärker auf die anderen, wenigen Zuläufe 2 der Zulaufleitung 5 aus, so dass die noch offenen Zuläufe 2 stärker durchströmt werden, was einer Sedimentablagerung auf dem entsprechenden Zulauf 2 entgegenwirkt.
Außerdem werden so die verstopften Zuläufe 2 durch die Druckerhöhung in der Zulaufleitung 5 freigespült, wobei der Druck beispielsweise auch durch das Schließen anderer Zulaufleitungen einfach erhöhbar ist.

Außerdem kann wegen der hohen Anzahl an steuerbaren Zulaufleitungen 5 über die Steuerventile 7 die Verteilung des zugeführten Abwasser am Boden 8 des Reaktorbehälters 1 viel feiner gesteuert werden.
Die zu einer Zulaufleitung 5 gehörenden Zuläufe 2 können dabei im Reaktorbehälter 1 neben und/oder übereinander angeordnet sein.

Beim Betrieb des Reaktors wird über die Zuläufe 2 zu reinigendes Abwasser in den Reaktorbehälter 1 eingeführt, wobei es zu einer innigen Vermischung zwischen dem zugeführten Abwasser und dem im Reaktor befindlichen Medium kommt, welches aus bereits teilweise gereinigtem Abwasser, Mikroorganismenpellets (in der Fig. 1 durch kleine Punkte angedeutet) und kleinen Gasbläschen besteht.

Das eingeführte Abwasser strömt von den Zuläufen 2 in dem Reaktorbehälter 1 langsam aufwärts, bis es in die mikroorganismenhaltige Schlammpellets enthaltende Fermentationszone gelangt. Die in den Pellets enthaltenen Mikroorganismen zersetzen die in dem Abwasser enthaltenen organischen Verunreinigungen hauptsächlich zu Methan und Kohlendioxidgas. Durch die erzeugten Gase entstehen Gasbläschen, von denen sich die größeren von den Pellets ablösen und in Form von Gasblasen durch das Medium perlen, wohingegen kleine Gasbläschen an den Schlammpellets haften bleiben. Diejenigen Pellets, an denen kleine Gasbläschen anhaften und welche daher ein geringeres spezifisches Gewicht als die anderen Pellets und das Wasser aufweisen, steigen in dem Reaktorbehälter 1 auf, bis sie den unteren Abscheider 11 erreichen.

Die freien Gasbläschen fangen sich in den Gashauben 13 und bilden unter dem First der Gashauben 13 ein Gaspolster.
Das in den Gashauben 13 gesammelte Gas sowie eine geringe Menge mitgerissener Pellets und Wasser werden beispielsweise über eine in der Stirnseite der Gashauben 13 vorhandene, nicht dargestellte Öffnung aus den Gashauben 13 abgeführt und über die Leitung 15 in die Gastrenneinrichtung 14 geführt.

Das Wasser, die aufsteigenden Mikroorganismenpellets und die Gasblasen, die nicht bereits in dem unteren Abscheider 11 abgetrennt wurden, steigen in dem Reaktorbehälter 1 weiter nach oben bis zu dem oberen Abscheider 12. Aufgrund der Abnahme des hydrostatischen Drucks zwischen dem unteren Abscheider 11 und dem oberen Abscheider 12 lösen sich die letzten kleinen Gasbläschen von den in den oberen Abscheider 12 gelangten Mikroorganismenpellets ab, so dass das spezifische Gewicht der Pellets wieder zunimmt und die Pellets nach unten sinken.
Die restlichen Gasblasen werden in den Gashauben 13 des oberen Abscheiders 12 aufgefangen und wiederum an den Stirnseiten der einzelnen Gashauben 13 in eine Gassammelleitung überführt, von der das Gas über die Leitung 15 in die Gastrenneinrichtung 14 geführt wird.

Das nunmehr gereinigte Wasser steigt von dem oberen Abscheider 12 weiter nach oben, bis es über die Überläufe aus dem Reaktorbehälter 1 abgezogen und durch eine Ablaufleitung abgeleitet wird.

In der Gastrenneinrichtung 14 trennt sich das Gas von dem restlichen Wasser und den Mikroorganismenpellets, wobei die Suspension aus Pellets und dem Abwasser über die Sinkleitung 16 in den Reaktorbehälter 1 rezirkuliert wird. Dabei mündet die Austrittsöffnung der Sinkleitung 8 in den unteren Teil des Reaktorbehälters 1, wo die rückgeführte Suspension aus Pellets und Abwasser mit dem dem Reaktor 1 über die Zuläufe 2 zugeführten Abwasser vermischt wird, wonach der Kreislauf von neuem beginnt.

Je nach dem Ursprung des dem Reaktor 1 über die Zuläufe 2 zugeführten Abwassers enthält das Abwasser mehr oder weniger Feststoffe. Abwasser aus der Papierindustrie beispielsweise enthält signifikante Konzentrationen an festen Füllmaterialien und Kalk.
Nachdem das feststoffhaltige Abwasser die Zuläufe 2 verlassen hat, steigt es nach oben in den zylinderförmigen Reaktorbehälterteil. Der Anteil der in dem Abwasser enthaltenen Feststoffe, der ein Mindestmass an spezifischer Dichte übersteigt, sinkt bereits nach dem Verlassen der Zuläufe 2 in den sich nach unten verjüngenden Trichter und sammelt sich dort.

Ferner fällt ein Teil des in dem Abwasser gelösten Kalziums, nachdem das Abwasser in die Schlammbettzone aufgestiegen ist, an den Schlammpellets aus. Dadurch übersteigt ein Teil der Schlammpellets eine kritische spezifische Dichte und sinkt infolge dessen aus dem Schlammbett ab und sammelt sich ebenfalls in dem Trichter.

Die Zuläufe 2 sind so gestaltet und zum Sedimentabzug 3 ausgerichtet, dass sich die von oben nach unten sinkenden Pellets nicht auf den Zuläufen 2 ablagern, sondern von der Aussenoberfläche der Zuläufe 2 abrutschen und sich ebenfalls in der Spitze des Trichters ansammeln.
Über den Sedimentabzug 3 kann das sich an der Spitze des Reaktorbehälters 1 sammelnde Sediment je nach Bedarf kontinuierlich oder chargenweise aus dem Reaktor abgezogen werden.

Zudem kann über die Zentralzufuhrleitung 10 ebenfalls nach Bedarf kontinuierlich oder chargenweise Flüssigkeit in den unteren Teil 2 des Reaktorbehälters eingeführt werden. Bei dem dem Reaktor über diese Zentralzufuhrleitung 10 zugeführte Flüssigkeit kann es sich um zu reinigendes Abwasser, rezirkuliertes Abwasser aus dem Reaktor, Frischwasser oder eine Mischung hiervon handeln.

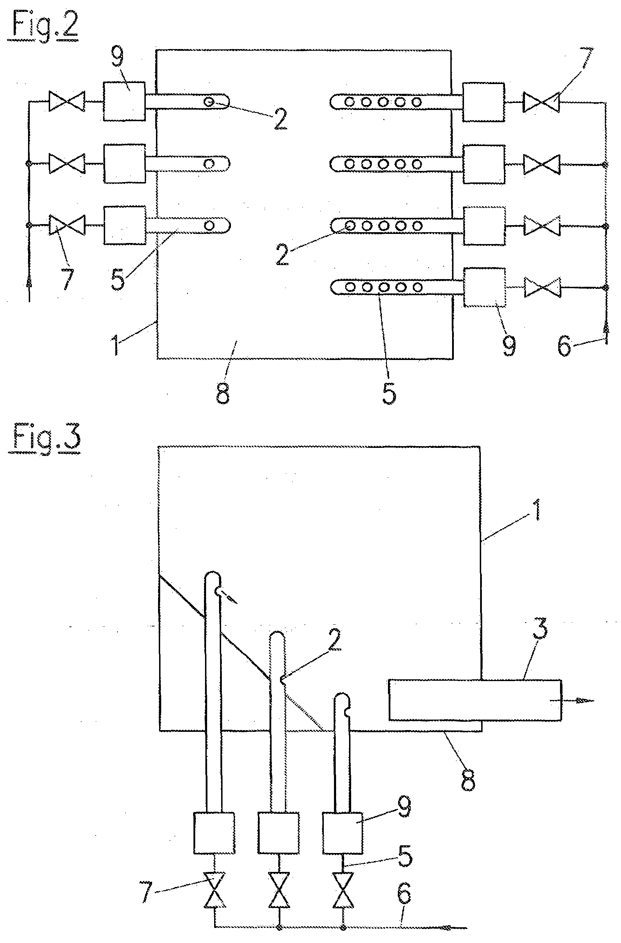

Der in Figur 2 dargestellte Reaktor hat im Gegensatz dazu einen viereckigen Querschnitt. Wie aus der Draufsicht auf den Boden 8 des Reaktors zu erkennen ist, werden hier seitlich von der Reaktorwand mehrere Zulaufleitungen 5 in den Reaktorbehälter 1 geführt.
Jeder der Zulaufleitungen 5 hat maximal fünf Zuläufe 2, die hier in den oberen Teil des Reaktorbehälters 1 gerichtet sind. Dies soll die Vermischung des über die Zuläufe 2 zugeführten Abwassers mit dem Medium im Reaktorbehälter 1 unterstützen.

Um ein Bedecken der Zuläufe 2 mit Sediment zu erschweren, befinden sich die Zuläufe mehrere Zentimeter über dem Boden 8 des Reaktors.

Außerhalb des Reaktorbehälters 1 befindet sich außerdem, die hier jeder Zulaufleitung 5 zugeordnete Strömungsmesseinrichtung 9 sowie ein Steuerventil 7 zur Beeinflussung der Durchflussmenge in der Zulaufleitung 5.

Statt einer stationären Strömungsmesseinrichtung 9 können auch mobile zum Einsatz kommen.
In jedem Fall ist die Anordnung der Steuer- und Messeinrichtungen 7,9 außerhalb des Reaktorbehälters 1 nicht so störanfällig wie innerhalb des Reaktors in der teils agressiven Atmosphäre. Auch Montage und Reparatur vereinfachen sich hierdurch.

Über die Strömungsmesseinrichtungen 9 kann leicht ermittelt werden, ob einzelne oder mehrere Zuläufe 2 einer Zulaufleitung 5 beeinträchtigt sind.
Bei einer Verstopfung kann dann beispielsweise durch eine kurzzeitige Druckerhöhung in der jeweiligen Zulaufleitung 5 versucht werden, die verstopften Zuläufe 2 wieder freizuspülen. Dabei kann die Druckerhöhung ebenso durch das Schließen anderer Zulaufleitungen 5 erfolgen.
Es kann auch generell der Druck in der Zulaufleitung 5 erhöht werden, wenn davon ausgegangen wird, dass alle Zuläufe 2 dieser Zulaufleitung 5 beeinträchtigt sind.

Der in Figur 3 im Längsschnitt durch den unteren Teil gezeigte Reaktorbehälter 1 hat zur Vereinfachung der Herstellung ebenfalls einen viereckigen Boden 8.
Dabei ragen die Zulaufleitung 5 von unten durch den Reaktorbehälter 1 über den Boden 8 hinaus. Beispielhaft hat jede Zulaufleitung 5 hier nur einen Zulauf 2, der so hoch über dem Boden 8 angeordnet ist, dass er über eine mögliche Sedimentablagerung am Boden 8, die hier selbst eine Schräge bildet, in jedem Fall hinausragt.
Bei Bedarf können die Zulaufleitungen 5 auch so ausgeführt werden, dass diese vorzugsweise von außerhalb des Reaktors verstellbar sind. Auf diese Weise lassen sich Höhe und Ausrichtung der Zuläufe 2 der entsprechenden Zulaufleitung 5 relativ leicht verändern bzw. anpassen.
Um die Sedimentablagerung am Boden 8 im Bereich der Zulaufleitungen 5 zu erschweren, ist der Boden 8 im Allgemeinen geneigt ausgeführt, wobei die Neigung so realisiert ist, dass das Sediment in Richtung eines Sedimentabzugs 3 am Boden 8 des Reaktors rutscht.
Außerdem sind alle Zuläufe 2 zu diesem Sedimentabzug 3 ausgerichtet. Damit bewirkt das über die Zuläufe in den Reaktorbehälter 1 eingebrachte Abwasser bereits ein Lösen und Transportieren von Sedimenten in Richtung des Sedimentabzugs 3. Zum Freispülen des Bodens 8 können auch einzelne oder alle Zuläufe 2 Abwasser mit höherem Druck als üblich in den Reaktorbehälter 1 eindüsen.

## Patentansprüche

1. Verfahren zur anaeroben Reinigung von Abwasser, insbesondere von Abwasser aus der Papierindustrie, umfassend:
- Bereitstellen eines Reaktor umfassend einen Reaktorbehälter (1), mehrere im unteren Bereich des Reaktorbehälters (1) angeordnete Zuläufe (2) zur Zuführung von zu reinigendem Abwasser in den Reaktor, wenigstens einen Ablauf (4) zum Abführen von gereinigtem Wasser sowie wenigstens einen Sedimentabzug (3), wobei ein oder mehrere Zuläufe (2) von einer Zulaufleitung (5) und mehrere Zulaufleitungen (5) von einer Sammelzulaufleitung (6) gespeist werden, alle Zulaufleitungen (5) jeweils ein Steuerventil (7) besitzen und der Reaktorbehälter einen Boden (8) aufweist, wobei alle Zuläufe (2) über den Boden (8) des Reaktorbehälters (1) hinausragen,
- Zuführen von zu reinigendem Abwasser von der Sammelzulaufleitung (6) zu den mehreren Zulaufleitungen (5),
- Zuführen von zu reinigendem Abwasser von den Zulaufleitungen (5) über die Zuläufe (2) in den Reaktorbehälter (1), wobei zumindest die Mehrzahl der Zulaufleitungen (5) einer Sammelzulaufleitung (6) maximal 10 Zuläufe (2) mit zu reinigendem Abwasser versorgt, und
- Öffnen zumindest einzelner der Steuerventile (7) wenigstens zeitweise unterschiedlich weit,
wobei alle der Zuläufe (2) so hoch über dem Boden (8) angeordnet werden, dass sie über eine mögliche Sedimentablagerung am Boden (8), die selbst eine Schräge bildet, hinausragen.

2. Verfahren nach Anspruch 1, **dadurch gekennzeichnet, dass** die allen Zulaufleitungen (5) zugeführte Abwassermenge über die Steuerventile (7) gesteuert wird.

3. Verfahren nach Anspruch 1 oder 2, **dadurch gekennzeichnet, dass** zumindest bei einigen, vorzugsweise bei allen Zulaufleitungen (5) die Durchflussmenge gemessen wird und die Steuerventile (7) in Abhängigkeit von der Durchflussmenge in den Zulaufleitungen (5) gesteuert werden.

4. Verfahren nach einem der Ansprüche 1 bis 3, **dadurch gekennzeichnet, dass** der Umfang der Sedimentablagerung am Boden (8) des Reaktorbehälters (1) gemessen wird.

5. Verfahren nach einem der Ansprüche 1 bis 4, **dadurch gekennzeichnet, dass** die Steuerventile (7) zur Reinigung des Boden (8) des Reaktorbehälters (1) von Sedimenten nur Zuläufe (2) verstärkt oder ausschließlich mit Flüssigkeit, insbesondere zu reinigendem Abwasser versorgen, die in einem freizuspülendem Sektor des Bodens (8) angeordnet und/oder auf einen Sedimentabzug (3) gerichtet sind.

## Claims

1. Method for the anaerobic purification of waste water, in particular waste water from the paper industry, comprising:
- providing a reactor comprising a reactor vessel (1), a plurality of inlets (2) arranged in the lower region of the reactor vessel (1) for feeding waste water to be purified into the reactor, at least one outlet (4) for discharging purified water, and at least one sediment drain (3), wherein one or more inlets (2) are fed from a feed line (5) and multiple feed lines (5) are fed from a collective feed line (6), all the feed lines (5) each have a control valve (7), and the reactor vessel has a base (8), wherein all the inlets (2) project beyond the base (8) of the reactor vessel (1),
- feeding waste water to be purified from the collective feed line (6) to the multiple feed lines (5),
- feeding waste water to be purified from the feed lines (5) into the reactor vessel (1) via the inlets (2), wherein at least the majority of the feed lines (5) of a collective feed line (6) supply a maximum of 10 inlets (2) with waste water to be purified, and
- opening at least some of the control valves (7) at least temporarily to different extents,
wherein all of the inlets (2) are arranged so high above the base (8) that they project above a possible sediment deposit on the base (8), which itself forms a slope.

2. Method according to Claim 1, **characterized in that** the quantity of waste water fed to all the feed lines (5) is controlled via the control valves (7).

3. Method according to Claim 1 or 2, **characterized in that** the volume flow is measured at least in some, preferably in all, of the feed lines (5), and the control valves (7) are controlled as a function of the volume flow in the feed lines (5).

4. Method according to one of Claims 1 to 3, **characterized in that** the extent of the sediment deposit on the base (8) of the reactor vessel (1) is measured.

5. Method according to one of Claims 1 to 4, **characterized in that** in order to purify the base (8) of the reactor vessel (1) of sediments, the control valves (7) supply liquid, in particular waste water to be purified, in a more intense manner or exclusively only to inlets (2) which are arranged in a sector of the base (8) that is to be flushed and/or which are directed towards a sediment drain (3).

## Revendications

1. Procédé pour le nettoyage anaérobie des eaux usées, en particulier des eaux usées provenant de l'industrie du papier, comprenant :
- la fourniture d'un réacteur comprenant un récipient de réacteur (1), plusieurs entrées (2) disposées dans la région inférieure du récipient de réacteur (1) pour l'alimentation en eaux usées à purifier dans le réacteur, au moins une sortie (4) pour l'évacuation de l'eau purifiée ainsi qu'au moins une évacuation de sédiments (3), une ou plusieurs entrées (2) étant alimentées par une conduite d'alimentation (5) et plusieurs conduites d'alimentation (5) étant alimentées par une conduite d'alimentation collectrice (6), toutes les conduites d'alimentation (5) possédant chacune une soupape de commande (7) et le récipient de réacteur présentant un fond (8), toutes les entrées (2) faisant saillie au-delà du fond (8) du récipient de réacteur (1),
- alimentation d'eaux usées à purifier depuis la conduite d'alimentation collectrice (6) à la pluralité de conduites d'alimentation (5),
- alimentation d'eaux usées à purifier depuis les conduites d'alimentation (5) par le biais des entrées (2) dans le récipient de réacteur (1), au moins la pluralité des conduites d'alimentation (5) d'une conduite d'alimentation collectrice (6) alimentant au maximum 10 entrées (2) en eaux usées à purifier, et
- ouverture d'au moins certaines des soupapes de commande (7) au moins temporairement à un degré d'ouverture différent,
toutes les entrées (2) étant disposées au-dessus du fond (8) à une hauteur telle qu'elles dépassent au-dessus d'un dépôt possible de sédiments sur le fond (8), qui forme lui-même une pente.

2. Procédé selon la revendication 1, **caractérisé en ce que** la quantité d'eaux usées acheminée à toutes les conduites d'alimentation (5) est commandée par le biais des soupapes de commande (7).

3. Procédé selon la revendication 1 ou 2, **caractérisé en ce qu'**au moins pour certaines conduites d'alimentation, de préférence pour toutes les conduites d'alimentation (5), le débit est mesuré et les soupapes de commande (7) sont commandées en fonction du débit dans les conduites d'alimentation (5).

4. Procédé selon l'une quelconque des revendications 1 à 3, **caractérisé en ce que** l'ampleur du dépôt de sédiments au fond (8) du récipient de réacteur (1) est mesurée.

5. Procédé selon l'une quelconque des revendications 1 à 4, **caractérisé en ce que** les soupapes de commande (7) pour épurer le fond (8) du récipient de réacteur (1) des sédiments, n'alimentent de manière accrue ou exclusivement avec un liquide, en particulier avec des eaux usées à purifier, que des entrées (2) qui sont disposées dans un secteur de rinçage du fond (8) et/ou qui sont orientées vers une évacuation de sédiments (3).
